(19) Europäisches Patentamt
European Patent Office
Office européen des brevets

(11) **EP 0 428 252 B1**

(12) **EUROPEAN PATENT SPECIFICATION**

(45) Date of publication and mention
of the grant of the patent:
**26.11.1997 Bulletin 1997/48**

(51) Int Cl.6: **H04N 7/167**

(21) Application number: **90310131.9**

(22) Date of filing: **17.09.1990**

(54) **A system for controlling access to broadcast transmissions**

System zur Steuerung des Zugangs zu Aussendungen

Système pour la commande d'accès à programmes diffusés

(84) Designated Contracting States:
**AT BE CH DE DK ES FR GB GR IT LI LU NL SE**

(30) Priority: **14.11.1989 IL 92310**

(43) Date of publication of application:
**22.05.1991 Bulletin 1991/21**

(73) Proprietor: **NEWS DATACOM LTD.**
**Maidenhead, Berks SL6 7B2 (GB)**

(72) Inventors:
• **Cohen, Michael**
**Jerusalem (IL)**

• **Hashkes, Jonathan**
**Jerusalem (IL)**

(74) Representative: **Godsill, John Kenneth**
**Haseltine Lake & Co.,**
**Imperial House,**
**15-19 Kingsway**
**London WC2B 6UD (GB)**

(56) References cited:
**EP-A- 0 200 310          WO-A-88/02899**
**DE-A- 1 083 311          DE-A- 3 640 680**
**US-A- 4 748 668**

**Description**

The present invention relates to broadcast transmission systems and techniques.

There is known in the patent literature a great variety of systems and techniques for broadcast transmission. More particularly systems for controlling access to broadcast transmissions are described in the following publication:

Satellite and Cable TV Scrambling and Descrambling, by Brent Gale and Frank Baylin, published by Baylin/Gale Productions, Boulder, Colorado, 1986.

Smart cards, plastic cards resembling credit cards with microprocessor inside of them, are known in the art. They are described in the book, Smart Cards, The New Bank Cards, by Jerome Svigals and published by Macmillan Publishing Company, NY, 1987.

WO-A-88/02899 discloses a smart card which already incorporates a code when it is purchased; in one described application, this code is used to decode television transmissions.

DE-A-3640680 discloses a different use for such a card, in particular for locking a video telephone. Switching information is held on the card to switch the telephone.

The present invention seeks to provide improved apparatus and techniques for controlling access to broadcast transmissions. For the purposes of the present specification and claims, broadcast transmissions are deemed to include both audio and video, combined and separately, whether transmitted by wire or by wireless techniques.

There is provided in accordance with the present invention a receiver system for controlling access to a broadcast transmission provided by a transmitter having a transmission scrambler for at least partially scrambling a broadcast, said broadcast transmission comprising the scrambled broadcast and information comprising data which is acted upon by a seed generating algorithm in the transmitter to generate a seed used in scrambling the broadcast, the system comprising:

a multiplicity of subscriber receivers each comprising: means for receiving the at least partially scrambled broadcast and the data which is used by the seed generating algorithm for the generation of the seed; and a receiving descrambler for descrambling said at least partially scrambled broadcast; and

a plurality of portable executing means operatively associable with any one receiving descrambler, characterized in that: in each receiver, the descrambler is operative, when associated with any one of said portable executing means, to generate the seed by executing operations on said data identical to those executed in the transmitter and in accordance with the seed generating algorithm, and to generate a descrambling code, based on the seed, for use by said associated receiving descrambler to enable said receiving descrambler to descramble said broadcast; and the seed generating algorithm is resident on the portable executing means.

It will be readily apparent that none of the descramblers need contain encrypted material. In accordance with a preferred embodiment of the present invention the seed generating algorithm is a one-way encoding function and it may be arranged to be executed a plurality of times. In accordance with one embodiment of the present invention, the executing means includes means for providing all of the instructions required to descramble the transmission. In accordance with another embodiment of the present invention, the executing means provides only part of the instructions required to descramble the transmission.

In accordance with a preferred embodiment of the present invention, the executing means comprises means for providing proof of authenticity to the receiving decoder. The proof of authenticity is preferably a public key proof of authenticity and preferably a Fiat-Shamir public key proof of authenticity.

In accordance with a preferred embodiment of the present invention, each executing means contains a separate identification element which is sensible by a scrambler.

Further, in accordance with a preferred embodiment of the present invention, each executing means comprises an element which indicates programming entitlements to the scrambler.

In accordance with a preferred embodiment of the present invention, the element which indicates programming entitlements to the scrambler is modified by information contained in the transmitted broadcast.

In accordance with a preferred embodiment of the present invention, the scrambler comprises a mailbox for receiving data from broadcast transmissions and from a first of the plurality of selectable executing means. Further, in accordance with a preferred embodiment of the present invention, the executing means is operative to access the mailbox. Such data may include, for example, activation data for enabling operation of the executing means and entitlement information.

In accordance with a preferred embodiment of the present invention, the executing means may contain information which can be accessed by the scrambler for modifying software thereof.

In accordance with a preferred embodiment of the present invention, the executing means comprises means for generating displayed messages via the scrambler.

In accordance with a preferred embodiment of the present invention, the scrambler is operative to generate displayed messages originating from any of the following sources: the broadcast, the scrambler and the executing means.

Further, in accordance with a preferred embodiment of the present invention, the displayed messages may be assigned designated priorities.

There is also provided, in accordance with a preferred embodiment of the invention, a system for transferring information comprising a plurality of portable card apparatus each comprising microprocessor apparatus for generating and transmitting data to be stored and fixed storage apparatus for receiving the data from a first of the plurality of card apparatus, for storing the data, and for enabling a second of the plurality of card apparatus to remove the data therefrom.

There is additionally provided, in accordance with the preferred embodiment, a system for transferring information comprising computing apparatus for generating and transmitting a first set of data to be stored, a plurality of portable card apparatus each comprising microprocessor apparatus for generating and transmitting a second set of data to be stored and fixed storage apparatus for receiving at least one of the first and second data from the computing apparatus and a first of the plurality of card apparatus, for storing the information, and for enabling a second of the plurality of card apparatus to remove the at least one of the first and second data therefrom.

For a better understanding of the present invention and to show how the same may be carried into effect, reference will now be made, by way of example, to the accompanying drawings in which:

Fig. 1 is a generalized block diagram illustration of a broadcast system constructed and operative in accordance with a preferred embodiment of the present invention;

Fig. 2 is a more detailed block diagram illustration of the transmission end of the system of Fig. 1;

Fig. 3 is a more detailed block diagram illustration of the reception end of the system of Fig. 1;

Fig. 4 is a generalized illustration of a communications protocol employed in accordance with a preferred embodiment of the invention;

Fig. 5 is an illustration of a information exchange protocol for use with a verifier and a smart card in accordance with a preferred embodiment of the present invention; and

Fig. 6 is an illustration of a Fiat-Shamir authentication protocol useful in the present invention.

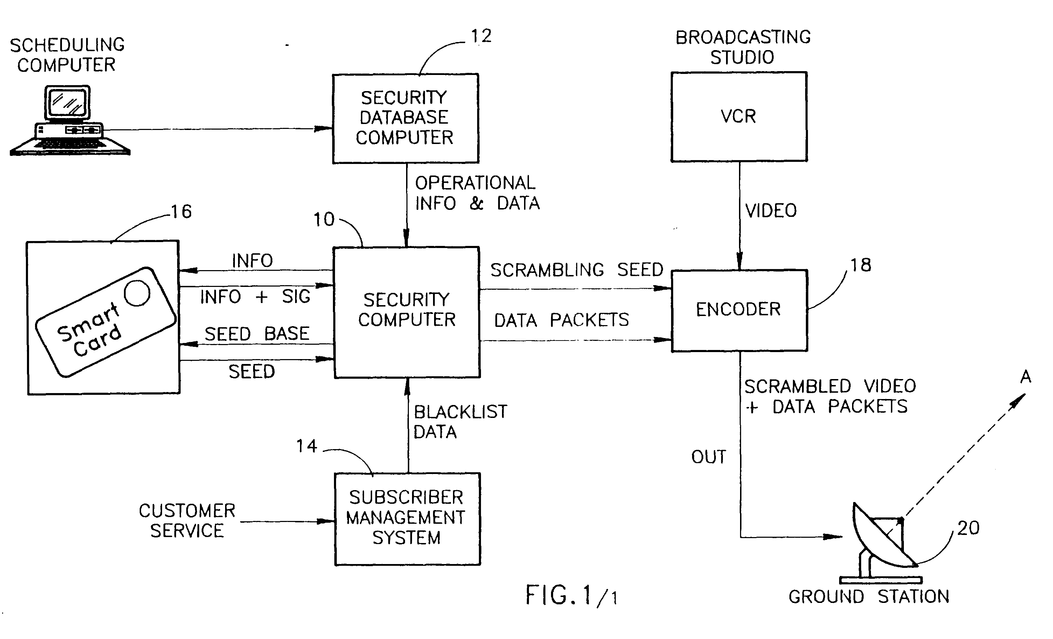

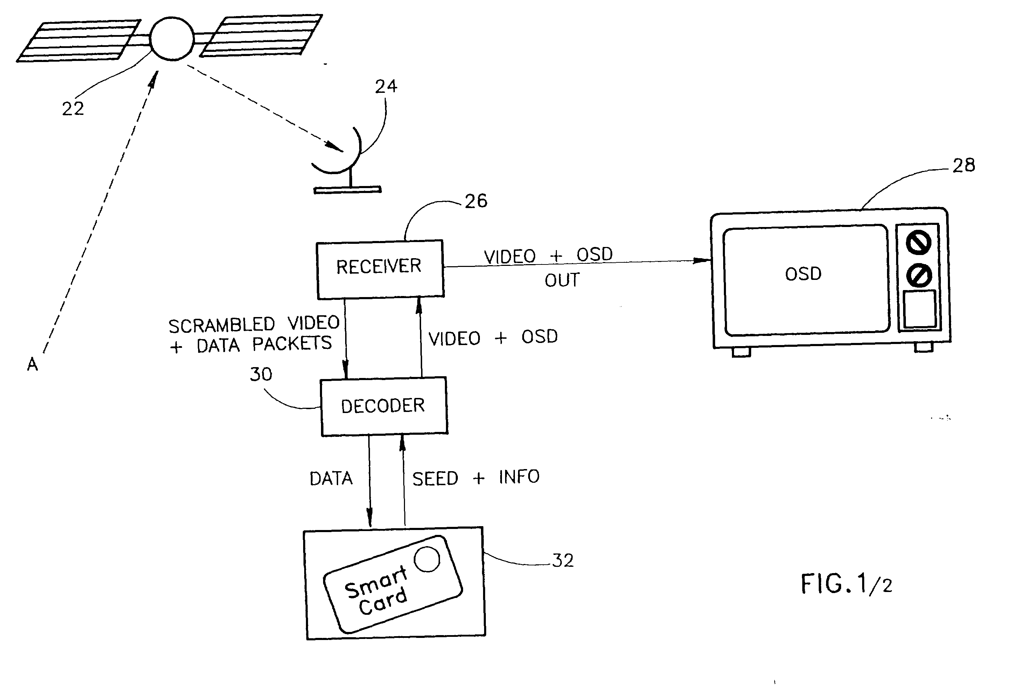

Reference is now made to Figs. 1 - 3, which illustrate the broadcast system constructed and operative in accordance with a preferred embodiment of the present invention. The broadcast system preferably comprises a security computer 10, such as an IBM AT having multiple serial communications links. The security computer 10 receives inputs from a security database computer 12, such as an IBM AT, which stores programming information as well as information relating to urgent or periodic subscriber actions. Typically an urgent subscriber action could consist of immediate, on-line activation, deactivation or re-activation of viewing entitlements. Typically a periodic subscriber action is a blacklisting order or a message to be transmitted periodically so that when the subscriber is tuned to the system, the order or message will be received and suitably processed.

The security computer 10 also receives an input from a subscriber management system 14, typically embodied in a large mainframe computer, commercially available from IBM or other major manufacturers. The subscriber management system stores details of all subscribers, their payment status and their entitlements.

In accordance with a preferred embodiment of the invention, the security computer 10 interfaces with one or more smart cards 16. Such smart cards are well known and are described in <u>Smart</u> <u>Cards</u>, <u>The</u> <u>New</u> <u>Bank</u> <u>Cards</u>, by Jerome Svigals. The smart cards preferably contain two computer programs. The first computer program contains a seed generating algorithm for producing a seed which is used in signal scrambling and descrambling at both ends of the system. The second program contains a signature protocol which appends a suitably hashed signature to all information regarding entitlements when transmitted over the system.

The security computer 10 supplies data, including, inter alia, unscrambled data, data bearing a signature and a seed to an encoder 18, which typically is located on the premises of a broadcasting station.

The operation of the apparatus of elements 10, 12, 14 and 16 may be emulated by a computer program whose object code is attached to EP-A-0 428 252 as Annex A.

The encoder 18 is typically an encoder which is commercially available from Thomson CSF Laboratoires Electroniques de Rennes, Cesson-Sevigne, France. The encoder 18 is operative, using the seed received via the security computer 10, to scramble all or part of an audio-video TV program received from any suitable program source, such as a VCR. The encoder 18 is also operative to modulate the data which is received from the security computer so as to enable both the scrambled program and the data to be transmitted together. It will be appreciated that the seed is not modulated and thus, is not transmitted.

The modulation technique may be selected at will from known techniques provided that it is suitable for use with the encoder 18. In accordance with a preferred embodiment of the invention, the data is inserted on unused video lines.

The output of the encoder 18 is broadcast by any suitable technique, either by wire or wireless apparatus. In the illustrated embodiment, the encoder outputs to a ground station 20, which communicates via a satellite 22 in geosynchronous orbit of the earth with a multiplicity of receiving ground stations 24, each representing a subscriber.

The signals received by each receiving ground station 24 are supplied to a receiver 26, typically commercially available from Amstrad of the UK. The receiver 26 is operative to convert the signals received thereby, which are selected by the subscriber, to baseband video. If the baseband video does not require descrambling, the receiver 26 remodulates the baseband video typically on a pre-selected channel for reception and display on a conventional television display 28.

Scrambled signals are supplied by the receiver 26 to a decoder 30, typically commercially available from Ferguson Limited, Enfield, Middlesex, England or from Thomson L.E.R.E.A. Illkirch, France.

In accordance with a preferred embodiment of the present invention, the decoder is operative together with a smart card 32, which contains a seed generation algorithm. It is a particular feature of the present invention, that the decoders contain no cryptographic secrets and that each of the smart cards 32 associated with the multiplicity of receivers 26 execute the identical seed generation algorithm on the data sent from the security computer 10 and thus, produce the identical seed used by encoder 18 to scramble the broadcast signal. It is an additional feature of the present invention that the receivers 26 are identical and the smart card 32 from one subscriber can operate in the receiver 26 of a second subscriber, thereby allowing the second subscriber to view, in his home, the programs received by the first subscriber.

In the embodiment wherein cards 16 and 32 or at least card 32 is a smart card, the smart card 32 includes a first program which verifies the genuineness of the hashed signature produced by card 16 and transmitted through the system, thus rejecting entitlement data bearing no signature or a non-genuine signature. The smart card 32 also contains a program for generating the seed for enabling the decoder to descramble the video TV program. The object code for a smart card 32 manufactured by News Gem Smartcard international Ltd. of Livingston, Scotland, is attached to EP-A-0 428 252 as Annex B.

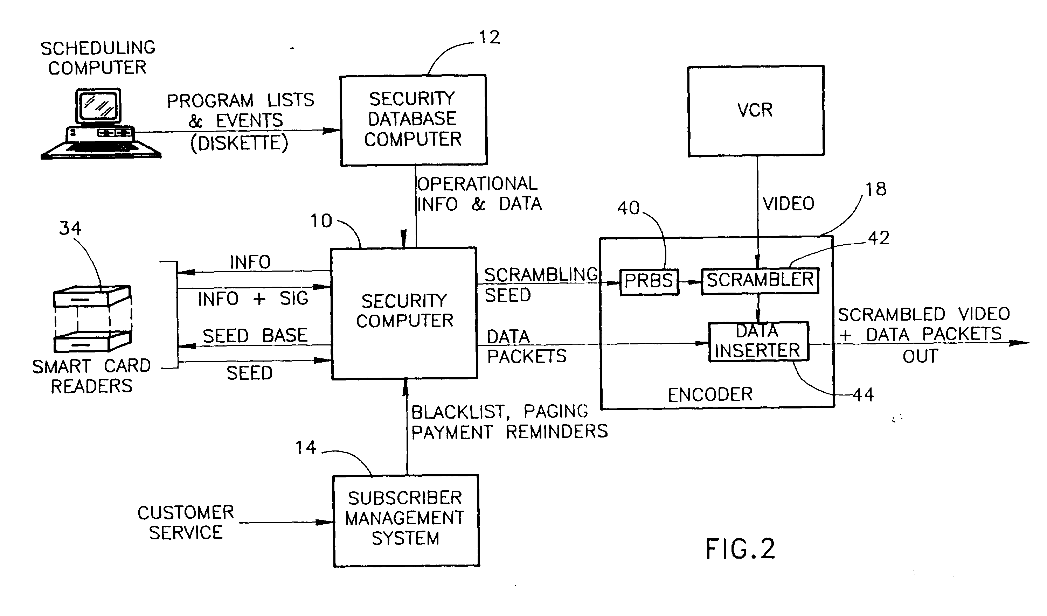

Reference is now made to Fig. 2 which illustrates the transmission apparatus of the present invention. As mentioned hereinabove, security computer 10 receives subscriber and programming data from subscriber management system 14 and security database 12. Security computer 10 sends a portion of the data relating to operations to be performed by smart card 32 to the smart card 16, via a smart card coupler 34, such as those commercially available from GemPlus of Gemenos, France. Smart card 16 appends a digital signature to the data for smart card 32 whereby the digital signature is generated by the second algorithm stored within the smart card 16. The smart card 16 additionally generates the scrambling seed to be used by the encoder 18.

The two algorithms stored in smart cards 16 and 32 are typically hashing functions operating on the data for smart card 32. The hashing function of the second algorithm, that for digital signature generation, typically is iterated a few times. The hashing function of the first algorithm, that for seed generation, typically is iterated a multiplicity of times. Hashing functions are described in The Art of Computer Programming, Vol 2:Seminumerical Algorithms by Donald E. Knuth.

The data for smart card 32 and the scrambling seed are sent from the smart card 16 through the security computer 10 to the encoder 18. The scrambling seed in loaded into a Pseudo-Random Bit Sequencer (PRBS) 40 which produces from it a pseudo-random sequence of bits. The sequence of bits is sent to a scrambler 42 which utilizes it to scramble the broadcast signal, which may come from a VCR.

The programming and security data as well as the data for smart card 32 is appended to the scrambled broadcast signal, by means of a data inserter 44, and the combined signal is sent to the ground station 20 to be modulated and transmitted.

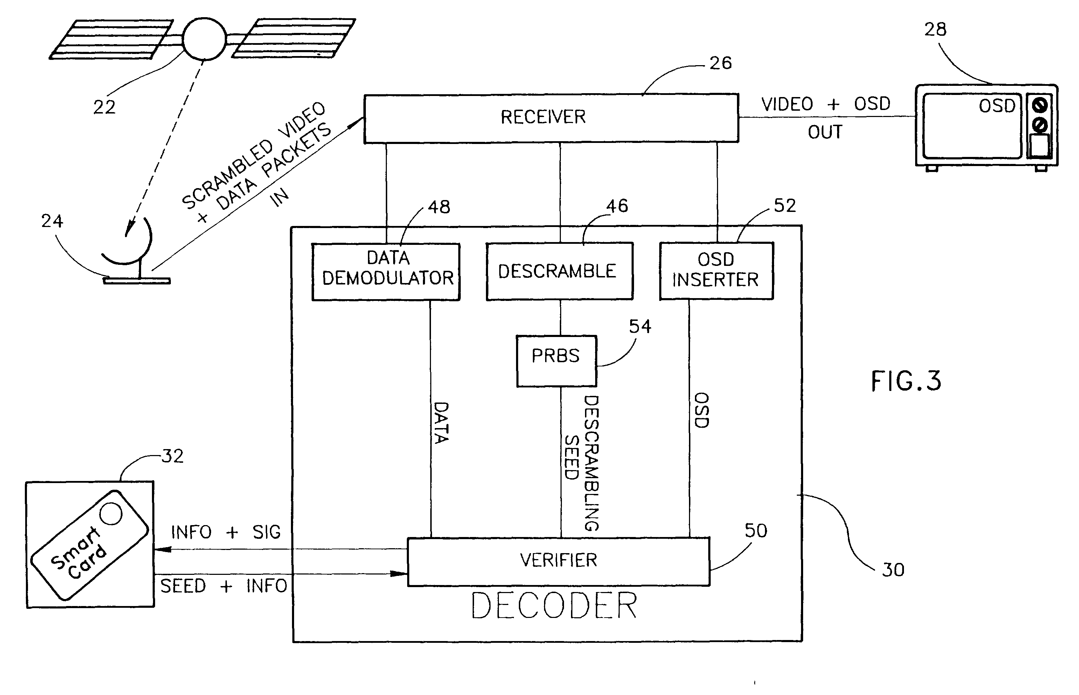

Reference is now made to Fig. 3 which illustrates the reception end of the system of Fig. 1. As mentioned hereinabove, the combined signal is received by receiving ground station 24 and is sent to receiver 26 which demodulates it into video baseband. The video baseband is then sent in parallel to both a descrambler 46 and a data demodulator 48 of decoder 30.

Data demodulator 48 extracts the data from the combined signal and sends it to a verifier 50. Verifier 50 then sends a portion of the data to the smart card 32 for verification of entitlements and for seed generation. The portion of the data which is sent is that dealing with entitlements and seed generation.

Smart card 32 receives the data portion and, if the entitlement information enclosed therein indicates that the subscriber is entitled to view the selected program, it utilizes the data portion to generate a decoding seed which is generally equivalent to the scrambling seed. If the subscriber is not entitled to receive the video signal, the decoding seed will not match the scrambling seed. Smart card 32 also generates on-screen displays based on the received data portion. For example, the received data portion typically includes a channel identification number and the current date. If the subscriber is not entitled to view the currently selected channel, an on-screen display message such as THIS CHANNEL IS BLOCKED, is generated. If the current date is beyond an expiration date stored in smart card 32, an on-screen display message such as YOUR CARD HAS EXPIRED is generated. It will be appreciated that typically only one on-screen display message can be displayed at one time.

The generated seed and on-screen displays, if any, are sent to the verifier 50. The verifier 50 sends the on-screen displays to an on-screen display inserter 52 which inserts the display into the baseband video after it has left the descrambler 46. The decoding seed is sent to a PRBS 54 which generates a pseudo-random bit sequence, generally identical to the scrambling seed, which is utilized by the descrambler 46 for descrambling the baseband video signal. The verifier 50 performs the following six additional functions:

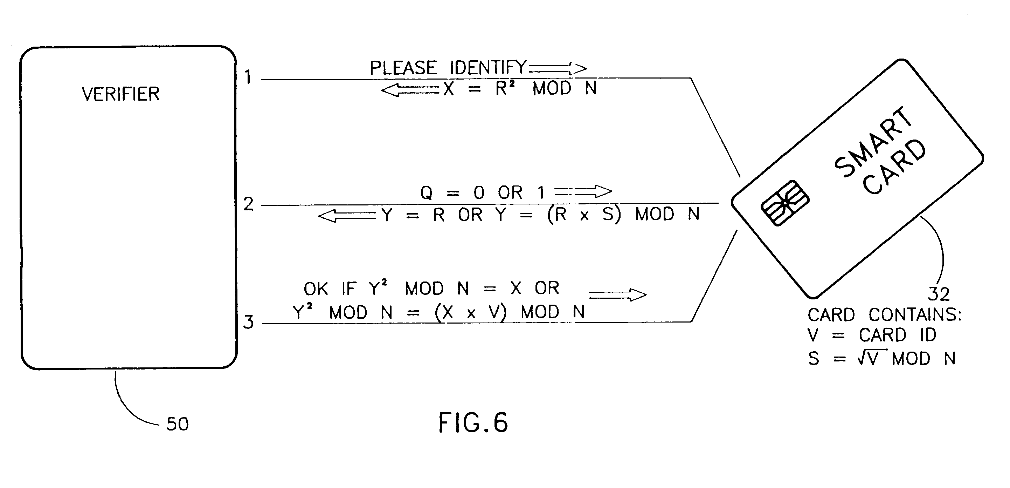

1. An authentication operation, as described hereinbelow and with reference to Fig. 6, for verifying that the smart card is authentic;

2. Generation of the decoding seed, in conjunction with the security computer 10, and management of pay-per-view programs, in the embodiment where the smart card 32 comprises a memory card. The algorithm used for seed generation is a hashing function operating on data from the security computer 10. The result is used as the decoding seed if the results of instructions such as comparisons between data stored in the memory card and data sent from the security computer 10 are positive;

3. comparison of priority levels of on-screen display messages, such as between those generated by smart card 32 and those sent from the security computer 10, for determining which message should be displayed and sending of the message to the on-screen display inserter 52;

4. display of the smart card 32 identification number upon request from the security computer 10;

5. blacklisting of smart cards 32 which contain an illegal identification number, as directed by the security computer 10; and

6. maintenance of a mailbox used to store messages from an old to a new smart card and from the security computer 10 to the smart card 32. Such messages may include enabling of the new card based on the message left by the old card. For pay-per-view systems where the smart card 32 stores the amount of money initially paid by the subscriber and deletes a predetermined amount of money for each program viewed, at the end of the subscription period, the old smart card 32 leaves in the mailbox an amount of money left to the subscriber (if any). The new smart card 32 adds to the amount stored within it the amount left in the mailbox.

Executable code for a verifier 50 incorporated into an 8052 processor from Intel is attached to EP-A-0 428 252 as Annex C.

The on-screen display inserter 52 inserts the on-screen display messages into the baseband video output of the descrambler 46 and the combined signal is sent to the receiver 26 for remodulation and for transmission to the TV set 28.

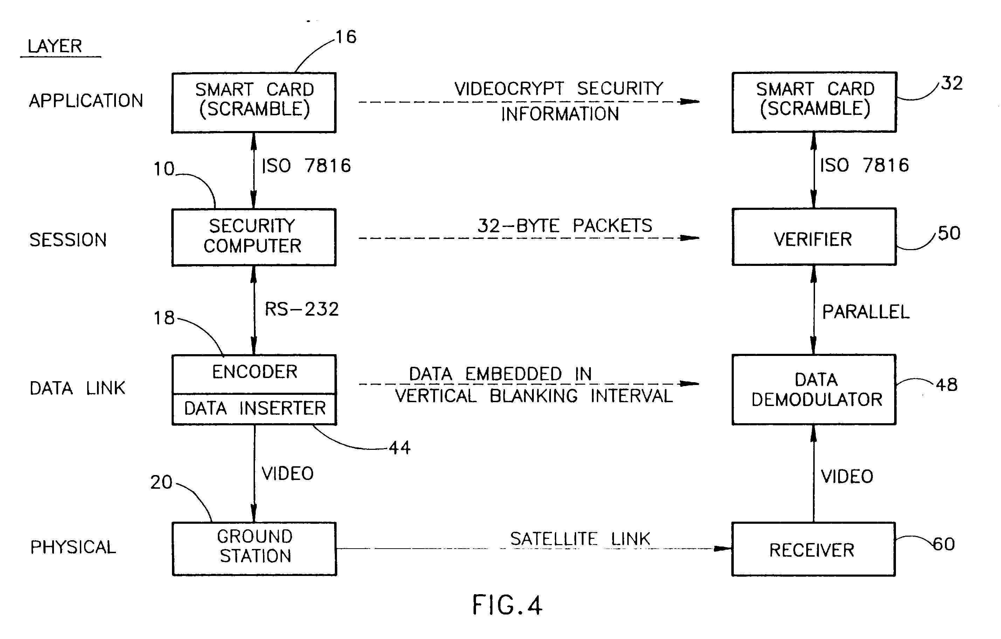

Reference is now made to Fig. 4 which illustrates a communications protocol typically used in the system of the present invention. Beginning at the lowest level, the physical level, the ground station transmitter 20 transmits a broadcast signal via a satellite link to a receiver apparatus 60 which comprises ground station receiver 24 and receiver 26.

At the data level, the data is inserted into the vertical blanking interval of the broadcast signal via the data inserter 44 of the encoder 18 and removed via the data demodulator 48 of decoder 30. The encoder 18 and decoder 30 may communicate between themselves without affecting the operation of the system of the present invention.

At the session level, the security computer 10 communicates with the verifier 50 of decoder 30 via data packets of the data. In the preferred embodiment of the present invention, the data packets are 32-byte packets. The information passed is system and subscriber information, authorization to perform the authentication operation and/or to display the smart card identification number, as described hereinabove. The session level communicates with the data level via an RS-232 protocol between the security computer 10 and the encoder 18 and via a parallel communication protocol, described in Annex D, between the verifier 50 and the data demodulator 48.

Finally, the application level is a communication level between the smart card 16 attached to the security computer 10 and the smart card 32 attached to the decoder 30. The information passed relates to seed and signature generation, and channel and date information.

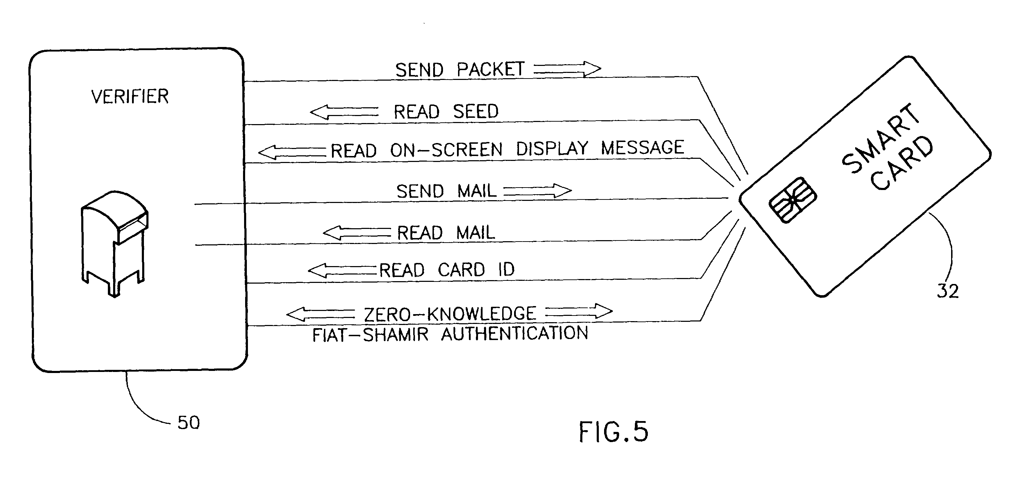

Reference is now made to Fig. 5 which illustrates a communications protocol between smart card 32 and verifier 50. Verifier 50 sends a data packet to the smart card 32 and the smart card 32 operates on the data packet to generate a decoding seed and on-screen display messages. Additionally, the smart card 32 receives mail from the mailbox of verifier 50 as well as sends mail to the mailbox.

In accordance with a preferred embodiment of the present invention, the verifier 50 reads the card identification number of the smart card 32 which is stored in the memory of the smart card. Moreover, upon instruction from the security computer 10, as transmitted in the data packet, the verifier 50 and smart card 32 perform an authentication process.

The authentication process is illustrated in Fig. 6 and discussed in detail in U.S. Patent 4,748,668 to Shamir. Smart card 32 has stored in it a card identification number, denoted V in Fig. 6, a second number, denoted S, and a modulus N, which is also stored in verifier 50. N is a public modulus which is a multiple of two values P and Q where P and Q are two prime numbers, typically of many digits, known only to the system which generates the smart cards. S is defined as:

$$S = (\sqrt{V}) * \text{Mod } N \qquad (1)$$

where the square root is performed as a modular square root. Modular arithmetic is discussed on pages 268-278 of <u>The Art of Computer Programming,</u> <u>Vol.2:Seminumerical Algorithms,</u> written by Donald E. Knuth and published by Addison-Wesley Publishing Company, Reading, Massachusetts.

The authentication process operates as follows. Verifier 50 requests a number X from smart card 32 where X is defined as:

$$X = R^2*\text{Mod } N \qquad (2)$$

where R is an arbitrary number. The verifier 50 then responds with a query bit Q, received from the security computer 10, whose value is randomly either 0 or 1. The smart card 32 then responds with a value Y where Y is defined as:

$$Y = R \qquad \text{if } Q = O \qquad (3)$$

$$Y = (R*S)*\text{Mod } N \text{ if } Q = 1 \qquad (4)$$

The smart card 32 is authenticated if the verifier 50 calculates the following values for $Y^2$.

$$Y^2 = X*\text{Mod } N \qquad \text{if } Q = O \qquad (5)$$

$$Y^2 = (X*V)*\text{Mod } N \text{ if } Q = 1 \qquad (6)$$

where the verifier 50 received V from the smart card 32 prior to the authentication process. Annex D: Protocol For Communication Between Verifier and Data demodulator

The data demodulator and verifier chip are connected by means of a parallel 8 bit link. The data demodulator is the master and the verifier is the slave. The hand-shaking requests 4 control lines:

RWN: read/write output from the data demodulator;
SENDN: output from the data demodulator;
ACKN: output from the verifier chip;
RESET: reset line from the verifier chip.

Writing a byte to the verifier chip:

The timing traces for data from the data demodulator to the verifier are shown on the next page. The verifier is in input mode with its data lines in high impedance. When the data demodulator is ready to send a byte, it sets RWN and SENDN to 0, after having tested if ACKN is high. At the same time, it outputs the data on the bus. After having stored the data, the verifier chip asserts it by setting ACKN to 0. Then the data demodulator sets SENDN to 1 and releases the data bus. To end the transfer, the verifier chip sets ACKN to 1.

The verifier chip has to answer to the SENDN request before a time-out (T4 max). In case the data demodulator does not receive an acknowledge (ACKN = 0) within this time, it releases the data bus and sets SENDN to 1.

DATA

RWN

SENDN

ACKN

T3

T2  Data valid

T1

T4

T5

Data unvalid

Sampling verifier

Reading a byte from the verifier chip:

The timing traces for data from the verifier chip to the data demodulator are shown hereinbelow. When the deocder needs data and if ACKN is high, it sets RWN to 1 and SENDN to 0. When the verifier is ready to send, it outputs the data and clears ACKN, in order to infrom that the data is valid. After the data demodulator has stored the data, it sets SENDD to 1. Then the verifier chip releases the data bus to high impedance and sets ACKN to 1 as soon as possible. There is no time-out security provided in this case.

The data demodulator is the master since it is synchronout with the TV lines. The use of the ACKN line allows a slow CPU for the verifier chip.

DATA

RWN

SENDN

ACKN

T6

T1

Data request

Data valid

T7  T8

Data stored

T9

Data unvalid

Software Specifications:

Data demodulator to Verifier Chip:

After the acquisition of a packet, the data demodulator transmits it to the verifier chip. The transfer between the two chips is done in the manner shown below.

7

I DATA PACKET (32 bytes) I INFO I I ACK I

The DATA PACKET is comprised of 32 corrected bytes dedicated to the verifier chip. This information is received, data demodulator and corrected by the data demodulator.

The INFO byte is one byte long. It contains information from the data demodulator for the verifier and is sent by the data demodulator. Bit 0 is used as a PUSH bit. A value of 1 indicates that a validation push button on the TV was pushed for more than three seconds. The data demodulator sends this information only one time and waits for the key to be depressed. In order to inform the user that his order has been accepted, the state of the displayed information will be changed (e.g. to a blinking mode) after the pushed button has been detected. Bits 1-7 are not currently used.

The ACK byte is sent by the verifier chip after the data demodulator sends the 33 bytes of data packet and INFO to verify that the data was received. If bit 0 is set to 1 then the verifier chip received the 33 bytes. If bit 0 is set to 0, the data demodulator sends the 33 bytes repeatedly until the bit is set to 1. Bits 1-7 are not currently used.

In case a time-out occurs during the packet transfer, the data demodulator attempts to send this byte again until the transfer succeeds. In order to be ready for the loading of a new control word, if there is no sufficient time to complete the packet transfer, the data demodulator will cancel the transfer and RESET the verifier chip before the key changeover occurs.

Verifier chip to data demodulator:

10ms before the control word chages (line 0, 64, 128 or 192), the data demodulator asks for the new control word. Whatever happens, the verifier chip as to answer. Therefore, line SENDN should be connected to an interrupt line from the verifier chip. The data format of the answer is shown below.

I CONTROL WORD (8 bytes) I L I OSD I

The 8 bytes of the CONTROL WORD contain the result of the smart card computation.

The L byte is one byte long indicating the length of an on-screen display. If L is 0, then the data demodulator has to switch off a device (OSD - on screen display inserter) for displaying the on screen display. If L is between 0 and 255, the data demodulator will receive an on screen message whose length is L. If L is 255, the OSD remains in its current state.

The L OSD bytes contain the information to be displayed by the OSD.

The verifier chip pin setup is shown on the next page.

| P0.0 | DATAI/O | P2.0 | C4N |
|------|---------|------|-----|
| P0.1 | CMDVCCN | P2.1 | C8N |
| P0.2 | CMDVPPN | P2.2 | CMD3.5N |
| P0.3 | VPP5N | P2.3 | CMD7N |
| P0.4 | VPP12.5N | P2.4 | |
| P0.5 | VPP21N | P2.5 | |
| P0.6 | RSTN | P2.6 | |
| P0.7 | C3CLK | P2.7 | |
| P1.0 | D0 | P3.0 | |
| P1.1 | D1 | P3.1 | |
| P1.2 | D2 | P3.2 | DETECT |
| P1.3 | D3 | P3.3 | SENDN |
| P1.4 | D4 | P3.4 | RWN |
| P1.5 | D5 | P3.5 | ACKN |
| P1.6 | D6 | P3.6 | |
| P1.7 | D7 | P3.7 | |

The name of the signals which are active low are ended by N.

## Claims

1. A receiver system for controlling access to a broadcast transmission provided by a transmitter having a transmission scrambler for at least partially scrambling a broadcast, said broadcast transmission comprising the scrambled broadcast and information comprising data which is acted upon by a seed generating algorithm in the transmitter to generate a seed used in scrambling the broadcast, the system comprising:
   a multiplicity of subscriber receivers (26) each comprising:

   means for receiving the at least partially scrambled broadcast and the data which is used by the seed generating algorithm for the generation of the seed; and
   a receiving descrambler (46) for descrambling said at least partially scrambled broadcast; and

   a plurality of portable executing means (32) operatively associable with any one receiving descrambler (46), characterized in that: in each receiver, the descrambler is operative when associated with any one of said portable executing means, to generate the seed by executing operations on said data identical to those executed in the transmitter and in accordance with the seed generating algorithm, and to generate a descrambling code, based on the seed, for use by said associated receiving descrambler to enable said receiving descrambler to descramble said broadcast; and the seed generating algorithm is resident on the portable executing means.

2. A system as in claim 1 wherein the seed generating algorithm is a one-way encoding function.

3. A system as in claim 2 wherein the one-way encoding function is a hashing function.

4. A system as in claim 2 or claim 3 wherein the one way encoding function comprises a one way encoding function executed a plurality of times.

5. A system as in any of the preceding claims, wherein the seed generating algorithm is executed in the portable executing means.

6. A system as in any of the preceding claims wherein the portable executing means is a smart card.

7. A system as in any one of the preceding claims and wherein each of said plurality of executing means includes means for providing all instructions required to descramble said broadcast.

8. A system as in any one of claims 1 to 6 and wherein each of said plurality of executing means includes means for providing a portion of instructions required to descramble said broadcast.

9. A system as in any one of the preceding claims and wherein each of said plurality of executing means comprises means for providing proof of authenticity to a receiving descrambler.

10. A system as in claim 9 and wherein said executing means comprises a public key proof of authenticity.

11. A system as in claim 9 and wherein said executing means comprises a Fiat-Shamir public key proof of authenticity.

12. A system as in any one of the preceding claims and wherein each of said plurality of executing means contains a separate identification element and wherein each descrambler (46) is responsive to the identification element contained by an operatively associated one of the plurality of executing means.

13. A system as in any one of the preceding claims wherein each of said plurality of executing means contains information which indicates programming entitlements to a descrambler.

14. A system as in claim 13 wherein said information which indicates programming entitlements to said descrambler is modified by information contained in said transmitted broadcast.

15. A system as in any one of the preceding claims and wherein each descrambler comprises an electronic mailbox for receiving data from broadcast transmissions and from one of said plurality of selectable and portable executing means.

EP 0 428 252 B1

**16.** A system as in claim 15 and wherein said executing means is operative to access said mailbox.

**17.** A system as in claim 15 or 16 wherein said data from broadcast transmissions and from said one of said plurality of selectable and portable executing means comprises entitlement information and activation data for enabling operation of said subscriber receiver.

**18.** A system as in any one of the preceding claims wherein said executing means contains information which can be accessed by said descrambler for modifying software thereof.

**19.** A system as in any one of the preceding claims wherein each of said plurality of executing means comprises means for generating displayed messages by means of said descramblers.

**20.** A system as in claim 19 wherein said displayed messages have assigned designated priorities.

**21.** A system as in any one of the preceding claims wherein each descrambler is operative to generate displayed messages originating from any of the following sources: said broadcast, said descrambler and an individual one of said plurality of executing means.

**22.** A system according to any one of the preceding claims wherein said receiving descramblers are identical.

**23.** A system according to any one of the preceding claims wherein each receiving descrambler contains no encrypted material.

**24.** A system for controlling access to broadcast transmissions comprising:
a transmitter having a transmission encoder for scrambling a broadcast; and a receiver system according to any one of the preceding claims.


**Patentansprüche**

**1.** Ein Empfangssystem zum Kontrollieren des Zugangs zu einer Rundfunkübertragung, die von einem Sender mit einem Übertragungsverwürfler zur mindestens teilweisen Verwürflung einer Rundsendung bereitgestellt wird, wobei die Rundfunkübertragung das verwürfelte Rundsenden und Informationen umfaßt, die Daten enthalten, auf die ein Keimerzeugungsalgorithmus im Sender einwirkt, um einen bei der Verwürflung der Rundsendung verwendeten Keim zu erzeugen, wobei das System folgendes umfaßt:
mehrere Teilnehmerempfänger (26), die jeweils folgendes umfassen:

Mittel zum Empfangen der mindestens teilweise verwürfelten Rundsendung und der Daten, die von dem Keimerzeugungsalgorithmus für die Erzeugung des Keims verwendet werden; und
einen Empfangsentwürfler (46) zum Entwürfeln der mindestens teilweise verwürfelten Rundsendung; und
eine Vielzahl von tragbaren Ausführungsmitteln (32), die mit einem beliebigen Empfangsentwürfler (46) wirksam verbunden werden können, dadurch gekennzeichnet, daß: in jedem Empfänger der Entwürfler bei Verbindung mit einem beliebigen der tragbaren Ausführungsmittel dahingehend wirkt, den Keim zu erzeugen, indem er an den Daten Operationen ausführt, die mit denen identisch sind, die im Sender und gemäß des Keimerzeugungsalgorithmus ausgeführt werden, und auf der Grundlage des Keims einen Entwürflungscode zur Verwendung durch den verbundenen Empfangsentwürfler, so daß der Empfangsentwürfler die Rundsendung entwürfeln kann, zu erzeugen; und der Keimerzeugungsalgorithmus auf den tragbaren Ausführungsmitteln resident ist.

**2.** System nach Anspruch 1, bei dem es sich bei dem Keimerzeugungsalgorithmus um eine Einweg-Codierfunktion handelt.

**3.** System nach Anspruch 2, bei dem es sich bei der Einweg-Codierfunktion um eine Aufbereitungsfunktion handelt.

**4.** System nach Anspruch 2 oder Anspruch 3, bei dem die Einweg-Codierfunktion eine Einweg-Codierfunktion umfaßt, die mehrmals ausgeführt wird.

**5.** System nach einem der vorhergehenden Ansprüche, bei dem der Keimerzeugungsalgorithmus in dem tragbaren Ausführungsmittel ausgeführt wird.

**6.** System nach einem der vorhergehenden Ansprüche, bei dem es sich bei dem tragbaren Ausführungsmittel um eine Chipkarte handelt.

**7.** System nach einem der vorhergehenden Ansprüche und bei dem jedes der Mehrzahl von Ausführungsmitteln Mittel enthält, um alle zum Entwürfeln der Rundsendung erforderlichen Anweisungen zu liefern.

**8.** System nach einem der Ansprüche 1 bis 6 und bei dem jedes der Mehrzahl von Ausführungsmitteln Mittel enthält, um einen Teil der zum Entwürfeln der Rundsendung erforderlichen Anweisungen zu liefern.

**9.** System nach einem der vorhergehenden Ansprüche und bei dem die Mehrzahl von Ausführungsmitteln Mittel umfaßt, um einem empfangenden Entwürfler einen Echtheitsbeweis zu liefern.

**10.** System nach Anspruch 9 und bei dem das Ausführungsmittel einen Echtheitsbeweis mit einem öffentlichen Schlüssel umfaßt.

**11.** System nach Anspruch 9 und bei dem das Ausführungsmittel einen Echtheitsbeweis mit einem öffentlichen Schlüssel nach Fiat-Shamir umfaßt.

**12.** System nach einem der vorhergehenden Ansprüche und bei dem jedes der Mehrzahl von Ausführungsmitteln ein getrenntes Identifizierungselement enthält und bei dem jeder Entwürfler (46) auf das Identifizierungselement reagiert, das in einem wirksam verbundenen der Mehrzahl von Ausführungsmitteln enthalten ist.

**13.** System nach einem der vorhergehenden Ansprüche, bei dem jedes der Mehrzahl von Ausführungsmitteln Informationen enthält, die einem Entwürfler Programmierberechtigungen anzeigen.

**14.** System nach Anspruch 13, bei dem die Informationen, die dem Entwürfler Programmierberechtigungen anzeigen, durch in der übertragenen Rundsendung enthaltene Informationen modifiziert werden.

**15.** System nach einem der vorhergehenden Ansprüche und bei dem jeder Entwürfler eine elektronische Mailbox zum Empfangen von Daten von Rundfunkübertragungen und von einem der Mehrzahl von auswählbaren und tragbaren Ausführungsmitteln umfaßt.

**16.** System nach Anspruch 15 und bei dem das Ausführungsmittel dahingehend wirkt, Zugang zu der Mailbox zu erhalten.

**17.** System nach Anspruch 15 oder 16, bei dem die Daten aus den Runkfunkübertragungen und von dem einen der Mehrzahl von auswählbaren und tragbaren Ausführungsmitteln Berechtigungsinformationen und Aktivierungsdaten zur Freigabe der Operation des Teilnehmerempfängers umfassen.

**18.** System nach einem der vorhergehenden Ansprüche, bei dem das Ausführungsmittel Informationen enthält, auf die der Entwürfler zum Modifizieren von Software davon zugreifen kann.

**19.** System nach einem der vorhergehenden Ansprüche, bei dem jedes der Mehrzahl von Ausführungsmitteln Mittel zum Erzeugen von angezeigten Nachrichten durch die Entwürfler umfaßt.

**20.** System nach Anspruch 19, bei dem den angezeigten Nachrichten bestimmte Prioritäten zugeordnet sind.

**21.** System nach einem der vorhergehenden Ansprüche, bei dem jeder Entwürfler dahingehend wirkt, angezeigte Nachrichten zu erzeugen, die von einer beliebigen der folgenden Quellen abgehen: die Rundsendung, der Entwürfler und ein einzelnes der Mehrzahl von Ausführungsmitteln.

**22.** System nach einem der vorhergehenden Ansprüche, bei dem die empfangenden Entwürfler identisch sind.

**23.** System nach einem der vorhergehenden Ansprüche, bei dem jeder empfangende Entwürfler kein verschlüsseltes Material enthält.

**24.** System zum Kontrollieren des Zugangs zu Rundfunkübertragungen, das folgendes umfaßt:
einen Sender mit einem Sendecodierer zum Verwürfeln einer Rundsendung; und ein Empfangssystem nach einem der vorhergehenden Ansprüche.

## Revendications

**1.** Système de récepteur pour contrôler l'accès à une transmission automatique d'un message à plusieurs destinataires, procuré par un émetteur comportant un dispositif d'embrouillage de la transmission pour embrouiller au moins partiellement un message radiodiffusé, ladite transmission automatique d'un message à plusieurs destinataires comprenant le message radiodiffusé embrouillé, ainsi que des informations comprenant des données qui sont traitées par un algorithme générant une valeur de départ dans l'émetteur pour générer une valeur de départ utilisée dans l'embrouillage du message radiodiffusé, le système comprenant:
une multitude de récepteurs d'abonnés (26), comprenant respectivement:

des moyens pour recevoir ledit message radiodiffusé au moins partiellement embrouillé et les données qui sont utilisées par l'algorithme de génération de la valeur de départ pour la génération de cette dernière, et un désembrouilleur de réception (46) pour désembrouiller ledit message radiodiffusé au moins partiellement embrouillé; et

plusieurs moyens d'exécution portatifs (32) qui peuvent être associés en entraînement à l'un quelconque des désembrouilleurs de réception (46), caractérisé en ce que: dans chaque récepteur, le désembrouilleur est opérationnel lorsqu'il est associé à l'un quelconque desdits moyens d'exécution portatifs pour générer la valeur de départ en procédant à des opérations d'exécution sur lesdites données, identiques à celles exécutées dans l'émetteur et en correspondance avec l'algorithme générant la valeur de départ, et pour générer un code de désembrouillage, basé sur la valeur de départ, qui doit être utilisé par ledit désembrouilleur de réception associé pour rendre ledit désembrouilleur de réception capable de désembrouiller ledit message radiodiffusé; et l'algorithme de génération de la valeur de départ est résident sur le moyen d'exécution portatif.

**2.** Système selon la revendication 1, dans lequel l'algorithme générant la valeur de départ est une fonction d'encodage unidirectionnelle.

**3.** Système selon la revendication 2, dans lequel la fonction d'encodage unidirectionnelle est une fonction d'adressage calculé.

**4.** Système selon la revendication 2 ou 3, dans lequel la fonction d'encodage unidirectionnelle comprend une fonction d'encodage unidirectionnelle exécutée à plusieurs reprises.

**5.** Système selon l'une quelconque des revendications précédentes, dans lequel l'algorithme générant la valeur de départ est exécuté dans le moyen d'exécution portatif.

**6.** Système selon l'une quelconque des revendications précédentes, dans lequel le moyen d'exécution portatif est une carte à circuit intégré.

**7.** Système selon l'une quelconque des revendications précédentes, et dans lequel chacun desdits plusieurs moyens d'exécution englobe des moyens pour fournir toutes les instructions requises pour désembrouiller ledit message radiodiffusé.

**8.** Système selon l'une quelconque des revendications 1 à 6, et dans lequel chacun desdits plusieurs moyens d'exécution englobe des moyens pour fournir une portion des instructions requises pour désembrouiller ledit message radiodiffusé.

**9.** Système selon l'une quelconque des revendications précédentes, et dans lequel chacun desdits plusieurs moyens d'exécution comprend des moyens pour fournir une preuve d'authenticité à un désembrouilleur de réception.

**10.** Système selon la revendication 9 et dans lequel lesdits moyens d'exécution comprennent une preuve d'authenticité à clé publique.

11. Système selon la revendication 9 et dans lequel lesdits moyens d'ecécution comprennent une preuve d'authenticité à clé publique de Fiat-Shamir.

12. Système selon l'une quelconque des revendications précédentes, et dans lequel chacun desdits plusieurs moyens d'exécution contient un élément d'identification séparé et dans lequel chaque désembrouilleur (46) est sensible à l'élément d'identification contenu dans un desdits plusieurs moyens d'exécution associé en entraînement.

13. Système selon l'une quelconque des revendications précédentes, dans lequel chacun desdits plusieurs moyens d'exécution contient des informations qui fournissent des autorisations de programmation à un désembrouilleur.

14. Système selon la revendication 13, dans lequel lesdites informations qui fournissent des autorisations de programmation audit désembrouilleur sont modifiées par des informations contenues dans ledit message transmis automatiquement à plusieurs destinataires.

15. Système selon l'une quelconque des revendications précédentes, et dans lequel chaque désembrouilleur comprend une messagerie aux lettres électronique pour recevoir des données provenant des transmissions radiodiffusées, ainsi que d'un desdits plusieurs moyens d'exécution portatifs et sélectionnables.

16. Système selon la revendication 15, et dans lequel lesdits moyens d'exécution sont opérationnels pour accéder à ladite messagerie.

17. Système selon la revendication 15 ou 16, dans lequel lesdites données provenant des transmissions radiodiffusées et dudit moyen faisant partie desdits plusieurs moyens d'exécution portatifs et sélectionnables comprennent des informations d'autorisation et des données d'activation pour la mise en oeuvre opérationnelle desdits récepteurs d'abonnés.

18. Système selon l'une quelconque des revendications précédentes, dans lequel lesdits moyens d'exécution contiennent des informations auxquelles peut avoir accès ledit désembrouilleur pour modifier leur logiciel.

19. Système selon l'une quelconque des revendications précédentes, dans lequel chacun desdits plusieurs moyens d'exécution comprend des moyens pour générer des messages affichés au moyen desdits désembrouilleurs.

20. Système selon la revendication 19, dans lequel des priorités désignées peuvent être affectées auxdits messages affichés.

21. Système selon l'une quelconque des revendications précédentes, dans lequel chaque désembrouilleur est opérationnel pour générer des messages affichés provenant de l'une quelconque des sources ci-après: ledit message transmis automatiquement à plusieurs destinataires, ledit désembrouilleur et un moyen individuel parmi lesdits plusieurs moyens d'exécution.

22. Système selon l'une quelconque des revendications précédentes, dans lequel lesdits désembrouilleurs de réception sont identiques.

23. Système selon l'une quelconque des revendications précédentes, dans lequel chaque désembrouilleur de réception ne contient pas d'éléments chiffrés.

24. Système pour contrôler l'accès à des messages transmis automatiquement à plusieurs destinataires, comprenant: un émetteur comportant un encodeur de transmission pour embrouiller un message transmis automatiquement à plusieurs destinataires, ainsi qu'un système de récepteur selon l'une quelconque des revendications précédentes.

FIG.1/1

SCRAMBLED VIDEO
+ DATA PACKETS

RECEIVER

VIDEO + OSD
OUT

OSD

VIDEO + OSD

DECODER

DATA    SEED + INFO

Smart Card

FIG.1/2

FIG.2

FIG.3

EP 0 428 252 B1

LAYER

APPLICATION | SMART CARD (SCRAMBLE) ~16 | - - - VIDEOCRYPT SECURITY INFORMATION → | SMART CARD (SCRAMBLE) ~32

ISO 7816 ↕ ISO 7816 ↕

SESSION | 10 SECURITY COMPUTER | - - - 32-BYTE PACKETS → | VERIFIER ~50

RS-232 ↕ PARALLEL ↕

DATA LINK | 18 ENCODER / DATA INSERTER ~44 | - - - DATA EMBEDDED IN VERTICAL BLANKING INTERVAL → | DATA DEMODULATOR ~48

VIDEO ↓ VIDEO ↑

PHYSICAL | 20 GROUND STATION | SATELLITE LINK → | RECEIVER ~60

FIG.4

18

FIG.5

VERIFIER

50

1. PLEASE IDENTIFY ⟸
   X = R² MOD N ⟹

2. Q = 0 OR 1 ⟸
   Y = R OR Y = (R × S) MOD N ⟹

3. OK IF Y² MOD N = X OR
   Y² MOD N = (X × V) MOD N ⟹

SMART CARD

32

CARD CONTAINS:
V = CARD ID
S = √V MOD N

FIG.6